# EUROPEAN PATENT APPLICATION

(11) **EP 0 792 795 A2**
(43) Date of publication of application: **03.09.1997**
(21) Application number: 97301281.8
(22) Date of filing: 26.02.1997
(51) Int. Cl.: B62L 3/02, B62L 1/00

(54) **Hydraulic brakes**

(30) Priority: 28.02.1996 GB 9604170
(71) Applicant: Weatherill, Ian, Colne, Lancashire BB8 9JE (GB); Sharp, Simon, Colne, Lancashire BB8 9JE (GB)
(72) Inventor: Weatherill, Ian, Colne, Lancashire BB8 9JE (GB); Sharp, Simon, Colne, Lancashire BB8 9JE (GB)
(74) Representative: Sherrard-Smith, Hugh

(57) **Abstract**

A hydraulic brake system for a bicycle includes a hydraulic fluid reservoir 31 mounted on top of a brake assembly 16 with the reservoir being connected to a cylinder 27 of the assembly when the brake actuating piston 28 is in a retracted or inoperative position. That connection between the cylinder and the reservoir is provided by a port 32.

When the piston 28 moves through the cylinder 27 to actuate the brakes communication with the reservoir 31 is shut off by closing of the port 32.

More fluid can be added to the hydraulic system, when the reservoir is in communication with the cylinder, by turning a control knob 36 on top of the reservoir to cause a piston 33 to move down a cylinder of the reservoir to cause fluid to be pushed out of the reservoir, through the port 32 and into the cylinder 27.

## Description

The present invention relates to a hydraulic brake arrangement and a method of adjusting an hydraulic brake arrangement. The present invention is particularly, although not exclusively applicable to hydraulic brakes for vehicles or bicycles and in particular mountain bikes.

In a known mountain bike a hydraulic brake is provided that is operated by pulling a lever on the handle bars. The pulling of the lever on the handle bars causes a piston within a cylinder to exert the hydraulic pressure required to operate the brake. A spring in the callipers where the actual brakes are mounted biases the brake pads away from the brake disc when the brakes are not required, and this is important in mountain bikes where the slightest contact of the pads on the disc may exert a small amount of friction thereby requiring greater effort on behalf of the rider. However, when the brakes are not being applied it is also required that they be maintained at a relatively close distance to the disc in order that the movement of the lever by the rider can have sufficient mechanical advantage to apply the very significant force required through the hydraulic system. Obviously as the pads become worn then the greater the distance the pad will have to move to contact the disc.

In the known arrangement the piston is connected to a threaded bolt that comes out of the piston into the space between the lever operated by the rider and the corresponding part of the handle bars that is gripped by the same hand. In order to move the pads closer to disc from their initial starting point, the threaded bolt is rotated in order to advance the piston through the cylinder and thereby move the volume of hydraulic fluid through the system to move the pads closer to the disc. As space is extremely restricted between the lever and the handle bar several bolts of different lengths are provided in order to have the adjustment required for the various levels of wear of the pad. Thus a rider will have to maintain in stock the different threaded members. Furthermore, the threaded member projects into the confined space where the lever is located. Thus the threaded bolt must be sufficiently small so as not to interfere too much with that space either when the lever is inoperative or when the lever is operated. Thus the threaded member is required to be small and it is difficult to engage and operate in order to adjust. Furthermore, the removal of one threaded member and the replacement by another is a complicated and time consuming operation. This can be difficult for a user's fingers, particularly in cold weather. A further problem with this known system is that the cylinder housing the piston has to be of considerable length in order to provide for the various adjustment positions required for the piston together with the operative range that the piston has to travel through in order to actuate the brakes. Thus the cylinder is relatively heavy and also tends to extend a considerable way across the handle bars thereby detracting from the performance and visual look of the bike.

It is an object of the present invention to attempt to overcome at least some of the above disadvantages.

According to one aspect of the present invention an hydraulic brake arrangement includes an operating member arranged to move from a first position towards a second position in order to cause a volume of hydraulic fluid in a system to apply the brakes and means for increasing the volume of the hydraulic fluid in the system.

The increase of the volume in the system may be arranged to cause the position of the brakes, when the operating member is in the first position, to be altered.

The means for increasing the volume of hydraulic fluid may include a reservoir. The reservoir may be connected to the system. The reservoir may be integral with a part housing the operating member. The reservoir may include a piston. The piston may be axially slidable within the reservoir. The reservoir may include a removable cap. The reservoir may be in fluid communication with the system, for instance when the operating member is in the first position or only when the operating member is in the first position. Movement of the operating member from the first position towards the second position may be arranged to cut off fluid communication between the reservoir and the system.

When the arrangement includes a reservoir an adjustment member may be accessible and the adjustment member may be accessible such that the palm of the hand of a user can face towards the adjustment member. The arrangement may be arranged to be provided for a bicycle and the arrangement may be mounted on the handle bars.The adjustment member may be spaced from the extent between the lever and handle bar of a bike.

The means for increasing the volume may comprise manually operable means or automatically operable means. Electronic control means may be provided for the arrangement.

According to a further aspect of the present invention a method of adjusting an hydraulic brake in which hydraulic fluid in a system is used to apply brakes comprises increasing the volume of hydraulic fluid in the system in order to adjust the brakes.

The method may comprise manually or automatically adjusting the volume. The method may comprise adjusting the volume when the system is mounted on a bike, such as when the bike is being ridden. The method may comprise adjusting the volume from a location spaced from the space between a lever of the brake system and the handle bar of the bike.

The method may comprise allowing the system to be in fluid communication with a reservoir prior to the brakes being applied and causing any fluid communication with the reservoir to be stopped after action has been taken to initiate brake application.

The present invention includes a method of adjusting an hydraulic brake arrangement as herein described.

The present invention may be carried into practice in various ways but one embodiment will now be described by way of example and with reference to the accompanying drawings, in which:-
Figure 1 is a schematic assembly view of a hydraulic disc brake together with the operating lever arrangement;
Figure 2 is a cross-section in the radial plane, aligned with the rotational axis of a wheel, of the brake calliper assembly in the retracted position of the pads;
Figure 3 is a view similar to the view in Figure 2 with the pads in the applied position, and
Figure 4 is a cross-section through the hydraulic adjustment mechanism.

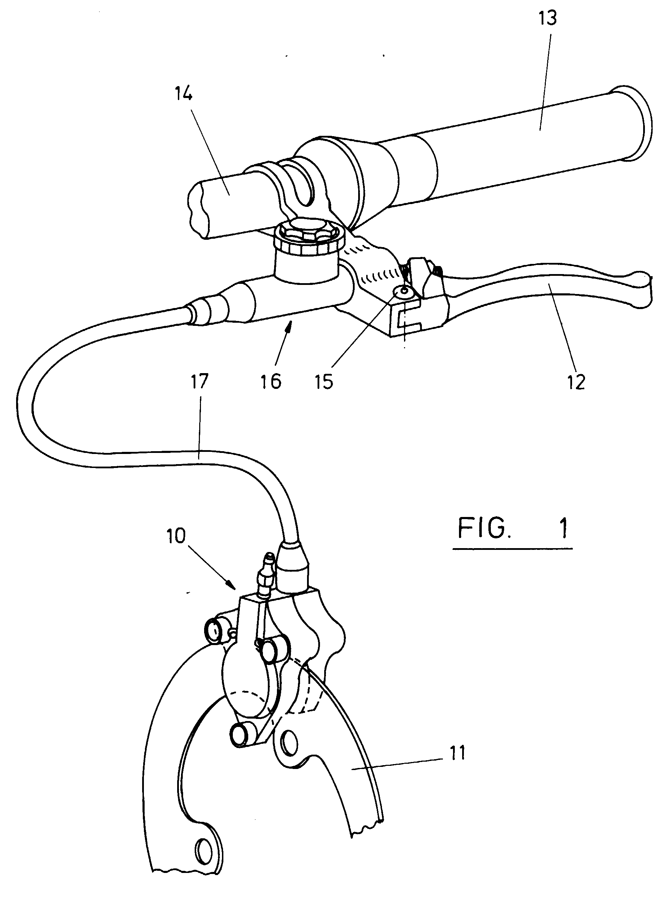

As shown in Figure 1, a brake calliper assembly 10 is mounted over a disc 11 that is caused to rotate with a bicycle wheel. The brake pads are caused to contact and exert a friction braking effect on the disc and therefore the wheel by pulling a lever 12 towards a grip 13 of the handle bar 14. The lever 12 is mounted on a pivot 15. Pulling about the pivot causes a piston within a cylinder assembly 16 to move and pressurise the calliper assembly via a tube 17 in order to apply the brakes.

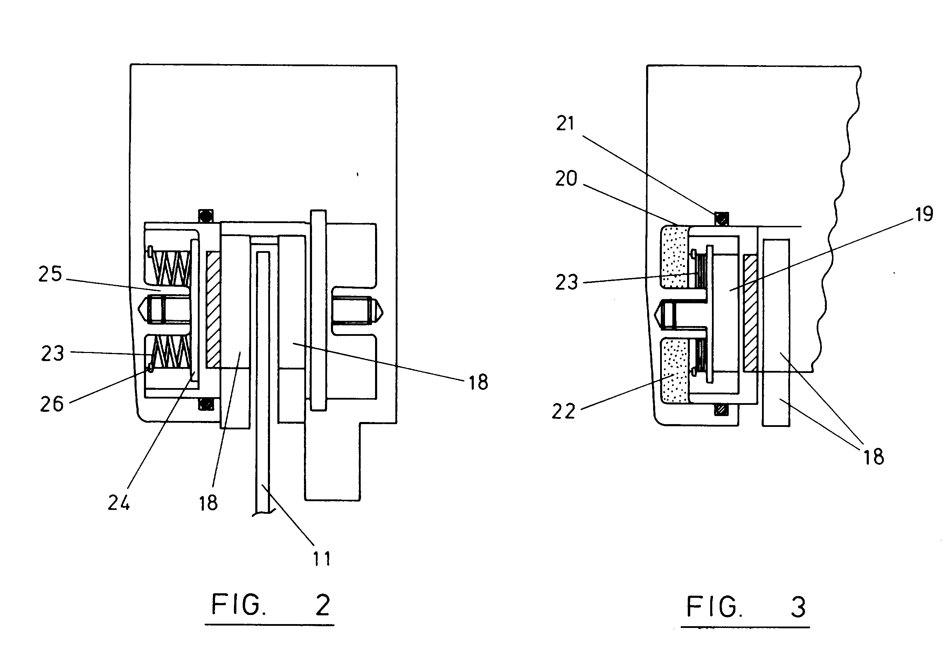

Figures 2 and 3 show the pads 18 in the clear and applied position respectively. As best seen in Figure 3, the pads 18 are mounted on one end of a piston 19. The piston 19 is slidably mounted within a cylinder 20 having a peripheral seal 21. The other end of the piston is able to be acted upon by hydraulic fluid in the chamber 22 in order to cause movement of the piston and therefore the pad to the right. That end of the piston also supports one end of a compression spring 23 such that, when the piston moves to the right, the spring is compressed. The other end of the spring bears against a lock washer 24 that is fastened to a static hub 25 that projects into the cylinder.

When the hydraulic pressure is reduced then the spring 23 is able to bear against a spring retainer 26 that is fast with the piston to move the pads away from each other.

A magnetic insert of the piston keeps the pads attached to the piston when the piston is retracted thus preventing rattle and rub.

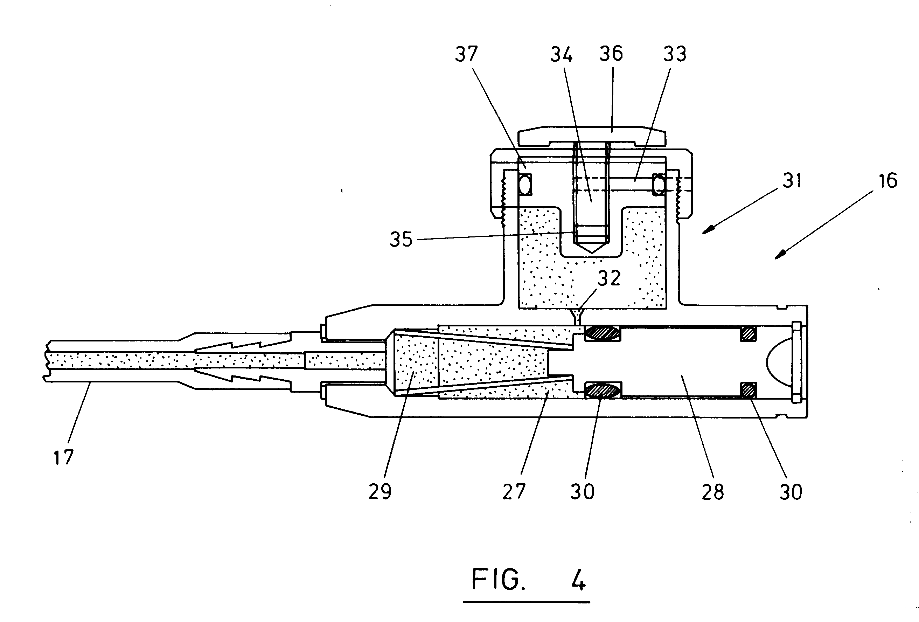

As the pads become worn then the volume of hydraulic fluid that has to be displaced in order to bring the pads into their operative position increases. Indeed there may well come a time when the movement of the lever is not sufficient to bring the pads into operation. Accordingly, as shown in Figure 4, a means for adding hydraulic fluid to the system is provided.

The assembly 16 comprises a cylinder 27 having a piston 28 that is caused to move to the left when the lever 12 is pulled. That causes pressurised fluid 29 to move into the tube 17 with that pressure subsequently operating the brakes as previously described. The piston is provided with seals 30 to prevent leakage of fluid.

A reservoir 31 is mounted on top of the assembly 16 and is connected to the cylinder 27, when the piston is in its retracted or inoperative position, by a port 32 which need not have a valve. The reservoir 31 contains a piston 33 that is able to move down the reservoir upon rotation of a bolt 34 that screws onto a blind bore 35 of the piston. When the piston 33 is moved downwardly fluid is pushed out of the port 32 and into the system of fluid that is pressured to operate the brakes. The addition of this fluid, under pressure, causes the pistons 19 in the calliper assembly to move towards the brake disc such that, when the brakes are next required, only a small movement of the brake lever will be required to overcome the force of the spring 23 and thereby cause the pads to be applied.

A large control knob 36 is connected to the bolt 34 whereby adjustment can be conveniently effected, even if the operator is wearing gloves or the bike is being ridden.

The bolt from the knob extends through a cap 37 that is screwed onto the reservoir. Should the reservoir need topping up or inspecting the cap can conveniently be unscrewed and removed.

The cylinder and the outside of the reservoir may be made or formed integrally with each other such as by being cast in a common mould.

Although the adjustment has been described as being effected manually it will be appreciated that the adjustment could be effected automatically, for instance when the movement of the lever required to bring the pads into the operative position exceeds a predetermined amount or when the wear on the pads increases beyond a certain amount.

Control means may be provided to monitor parts of the braking system, such as degree of lever movement or pad wear in order to alert a user that more fluid is required in the system or in order to cause more fluid to be added to the system, when required.

Although the brake system described above relates to a brake system for a bicycle, the system may also apply to cars such as electric cars. In such an application the system may have any of the features described and the brakes may be arranged to be applied by a hand or foot operated lever.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An hydraulic brake arrangement including an operating member (12) arranged to move from a first position towards a second position in order to cause a volume of hydraulic fluid in a system to apply the brakes (10) and means for increasing the volume of the hydraulic fluid in the system.

2. An arrangement as claimed in Claim 1 in which the means for increasing the volume in the system is arranged to cause the position of the brakes (18), when the operating member is in the first position, to be altered.

3. An arrangement as claimed in Claim 1 or 2 in which the means for increasing the volume of hydraulic fluid includes a reservoir (31).

4. An arrangement as claimed in Claim 3 in which the reservoir (31) is integral with a part housing the operating member.

5. An arrangement as claimed in Claim 3 or 4 in which a piston (28) is axially slidable within the reservoir.

6. An arrangement as claimed in any of Claims 3 to 5 in which the reservoir (31) is in fluid communication (32) with the system only when the operating member is in the first position.

7. An arrangement as claimed in Claim 6 in which movement of the operating member from the first position towards the second position is arranged to cut off fluid communication (32) between the reservoir (31) and the system.

8. An arrangement as claimed in any preceding claim in which a reservoir volume adjustment is arranged to be mounted on the handle bars of a bicycle.

9. An arrangement as claimed in Claim 8 in which the adjustment member (36) is arranged to be spaced from the extent between a lever (12) and handle bar (13) of a bike in which the lever comprises the operating member.

10. A method of adjusting an hydraulic brake in which hydraulic fluid in a system is used to apply brakes (18) comprising increasing the volume of hydraulic fluid in the system in order to adjust the brake.

11. A method as claimed in Claim 10 comprising manually adjusting (33, 34, 36) the volume of hydraulic fluid in the system.

12. A method as claimed in Claim 10 comprising automatically adjusting the volume of hydraulic fluid in the system.

13. A method as claimed in any of Claims 10 to 12 comprising adjusting the volume of hydraulic fluid in the system when the system is mounted on a bike and when the bike is being ridden.

14. A method as claimed in Claim 13 comprising adjusting the volume of hydraulic fluid in the system from a location spaced from the space between the lever of the brake system and the handle bar of a bike.

15. A method as claimed in any of Claims 10 to 14 comprising allowing the system to be in fluid communication with a reservoir prior to the brakes being applied and causing any fluid communication with the reservoir to be stopped after action has been taken to initiate brake application.
